# EUROPEAN PATENT APPLICATION

(11) **EP 2 174 825 A2**
(43) Date of publication of application: **14.04.2010**
(21) Application number: 08445034.5
(22) Date of filing: 05.12.2008
(51) Int. Cl.: B60L 11/18

(54) **Power generation system for use with vehicle**

(30) Priority: 02.10.2008 TW 97217644 U
(71) Applicant: Everphoton Energy Corporation, Tapei (TW)
(72) Inventor: Chen, Yee-Lee, Tapei (TW); Tsai, Chong-Han, Xin-Zhuang, Tapei County (TW)
(74) Representative: Rosenquist, Per Olof

(57) **Abstract**

Provided is a power generation system characterized by integration of a photovoltaic power generation device and a fuel cell, including: (a) a photovoltaic power generation device including a movable platform, a platform moving mechanism, and a solar tracking module; (b) a power management device including a storage battery and a power management unit; and (c) a fuel cell device including an electrolysis tank for producing hydrogen and oxygen by water electrolysis, a fuel storage unit, and a fuel cell connected to the fuel storage unit so as to receive hydrogen fuel therefrom and generate electric power to be supplied to the vehicle as a power source thereof. The platform moving mechanism is configured to move the movable platform. The solar tracking module determines the incident angle of light falling on a solar panel. The power generation system is applicable to ordinary vehicles and functions as a mobile solar power supply system.

## Description

### BACKGROUND OF THE INVENTION

### 1. Field of the Invention

The present invention relates to power generation systems, and more particularly, to a mobile power generating and power supplying system characterized by integration of a photovoltaic cell and a fuel cell and configured for use with vehicles.

### 2. Description of the Prior Art

With oil price surging and greenhouse effect increasing, human beings start to look for alternative energy sources with a view to reducing dependence on crude oil and emission of gases which contribute to greenhouse effect. Hence, development of various renewable energy and clean-burning energy is burgeoning. Among these, solar energy is well known to be a kind of renewable energy, and clean-burning energy is exemplified by hydrogen.

Solar power generation is age-old technology. At the beginning, it features photo-thermal conversion. Now, it is focused on photoelectric conversion. Solar power generation facilities usually comprise lenses, mirrors, and solar tracking devices configured to focus sunlight, change a path of light propagation, and change the orientation of solar panels, respectively, so as to increase conversion efficiency. Solar tracking devices for use in power generation are found mostly in power generation facilities, for example, an array of solar panels. The purpose of solar tracking devices is to change the incident angle of an incoming light ray so as to maximize the efficiency of photoelectric conversion. Related patents abound. US4,205,657 discloses that, power generation or cooling is implemented by heating up water, using sunray focused by aluminum sheets with reflective curved surfaces. US4,350,837 discloses that light operable at a specific frequency is effectuated by focusing, reflection, and scattering and is configured for use in photovoltaic module-based power generation. US5,022,929 discloses that solar panels keep facing sunbeams squarely by means of a rotational platform capable of rotational movement with two degrees of freedom in the presence of link mechanism and hydraulic control. US5,983,634 discloses a power station equipped with movable reflection mirrors conducive to photothermal conversion and photoelectric conversion. US6,396,239 discloses a portable solar power generation device with a rotational axle adjustable for head-on exposure to sunshine. US7,240,674 disclose a one-axis solar tracker. Although the aforesaid solar power generation devices are innovative and really go to the core of the issues addressed by the inventors, they are incapable of mobility, of limited solar tracking function, or portable but unfit for their integration with a carrier.

Fuel cells are energy storage devices that entail supplementing fuel in order to allow electrochemical reaction to take place and produce energy. Fuels in wide use for the time being include hydrogen, methanol, ethanol, and natural gas. Among these, hydrogen fuel reacts with oxygen to produce water as a product. In hydrogen-based fuel cells, energy conversion brings relatively less pollution and no noise but is more efficient than general power generation technologies. Despite its advantages, development of fuel cells has its own predicament, namely availability of hydrogen fuel will be one of the important indices of the industrial applicability of hydrogen fuel as a potential energy source. Common methods for producing hydrogen include steam reforming, water electrolysis, etc. Emission of greenhouse gases to a certain extent will remain inevitable, provided that any existing method of power generation is in use. By contrast, where renewable energy is used in production of hydrogen, pollution caused by a process starting from energy retrieval and ending in energy release is markedly less than existing methods.

Vehicles account for considerable greenhouse gases. Hence, to reduce emission of greenhouse gases, the transport industry is keen on different kinds of research, reduction of gasoline consumption, preparation of clean-burning fuel, development of composite motor cars and power-driven cars, etc. Among these, both composite motor cars and power-driven cars require batteries that function as energy storage devices and sources of power. However, composite motor cars and power-driven cars are not popular with drivers, because of the long time taken to recharge storage batteries, a small number of recharging stations, and uneven distribution of the recharging stations.

Accordingly, the industrial sector is faced with an urgent issue, that is, developing a new power generating and power supplying system configured for use with vehicles, enhancement of power generation efficiency, resolution of recharging problems, and environmental protection.

Solar power generation and fuel cells are the most promising alternative energy solutions for the time being. Studies on solar powered cars and fuel cell powered cars are to be still growing, and their forthcoming integration into a power generation system will keep their respective advantages, namely enhanced endurance and zero emission. Nevertheless, solar powered cars in use are not running at full speed, because they have only one distinguishing feature - solar panels attached to their body. To the best knowledge of the inventor of the present invention, a solar power generation system has 30% more output power when capable of solar tracking. Hence, a tracking-enabled solar power generation system, coupled with solar panels attached to bodies and building integrated photovoltaics (BIPV) attached to windshields, further reduces the costs of a the electrodynamic system of a vehicle, or even turns the vehicle into a mobile power generation system whose outdoor users need not worry about power supply to the vehicle but enjoy the convenience of gaining access to power supply anytime and anywhere. In view of this, the present invention provides a tracking-enabled solar power generation system for installation on a carrier, so to get in line with the trend toward using fuel cells in various carriers. The tracking-enabled solar power generation system performs solar powered electrolysis of water so as to produce hydrogen fuel required for fuel cells or store electric power in a storage battery, allowing the electric power to be supplied to a carrier and an external device.

### SUMMARY OF THE INVENTION

In view of the above drawbacks of the prior art, it is a primary objective of the present invention to provide a power generation system for use with vehicles.

Another objective of the present invention is to provide a power generation system with enhanced efficiency of power generation.

In order to achieve the above and other objectives, the present invention discloses a power generation system for use with vehicles, comprising: (a) a photovoltaic power generation device connected to a vehicle and comprises a movable platform, a platform moving mechanism, and a single-axis or two-axis solar tracking module, wherein the movable platform carries a photovoltaic power generation module equipped with a solar panel and converts light energy received by the solar panel into electrical energy, wherein the platform moving mechanism moves the movable platform, and wherein the solar tracking module is connected to the platform moving mechanism so as to determine the incident angle of light falling on the solar panel; and (b) a power management device comprising a storage battery and a power management unit, wherein the storage battery stores the converted electrical energy from the photovoltaic power generation module and providing electric power, wherein the power management unit is connected to the photovoltaic power generation device and the storage battery so as to prevent the storage battery from being over-recharged, over-discharged, or reversely recharged; (c) a fuel cell device connected to the power management device and configured to receive the electrical energy produced by the photovoltaic power generation module, wherein the fuel cell device comprises: an electrolysis tank connected to the power management device to produce hydrogen and oxygen by water electrolysis, a fuel storage unit for receiving and storing the hydrogen and the oxygen produced in the electrolysis tank, and a fuel cell connected to the fuel storage unit so as to receive hydrogen fuel therefrom and generate electric power to be supplied to the vehicle as a power source thereof.

In another preferred embodiment of the present invention, a power generation system for use with a vehicle comprises: (a) a photovoltaic power generation device for use with a vehicle, comprising a movable platform, a platform moving mechanism, and a solar tracking module, wherein the movable platform carries a photovoltaic power generation module equipped with a solar panel and converts light energy received by the solar panel into electrical energy, wherein the platform moving mechanism moves the movable platform, and wherein the solar tracking module is connected to the platform moving mechanism so as to determine the incident angle of light falling on the solar panel; and (b) a power management unit electrically connected to the photovoltaic power generation device and configured to control a power source provided to the vehicle by photovoltaic power generation module; and (c) a fuel cell device for receiving, through the power management unit, the electrical energy produced by the photovoltaic power generation module, the fuel cell device comprising: an electrolysis tank, a fuel storage unit, and a fuel cell, wherein the electrolysis tank is connected to the power management unit so as to produce hydrogen and oxygen by water electrolysis, wherein the fuel storage unit receives and stores the hydrogen and the oxygen produced in the electrolysis tank, wherein the fuel cell is connected to the fuel storage unit so as to receive hydrogen fuel therefrom and generate electric power to be supplied to the vehicle as a power source thereof. The power management unit instructs the electrolysis tank to stop water electrolysis whenever the fuel storage unit reaches an upper limit of safe storage.

### BRIEF DESCRIPTION OF THE DRAWINGS

FIG. 1A is a schematic view of a power generation system for use with a vehicle according to the present invention;
FIG. 1B is a schematic view of the power generation system for use with a vehicle according to the present invention, wherein the photovoltaic power generation device has a single-axis platform moving mechanism;
FIG. 1C is a schematic view of a two-axis platform moving mechanism of the present invention;
FIG. 2 is a schematic view of a fuel cell device of the present invention; and
FIG. 3 is a schematic view showing another preferred embodiment of the power generation system for use with a vehicle according to the present invention.

### DETAILED DESCRIPTION OF THE EMBODIMENTS

The present invention is herein illustrated with specific embodiments, so that one skilled in the pertinent art can easily understand other advantages and effects of the present invention from the disclosure of the invention.

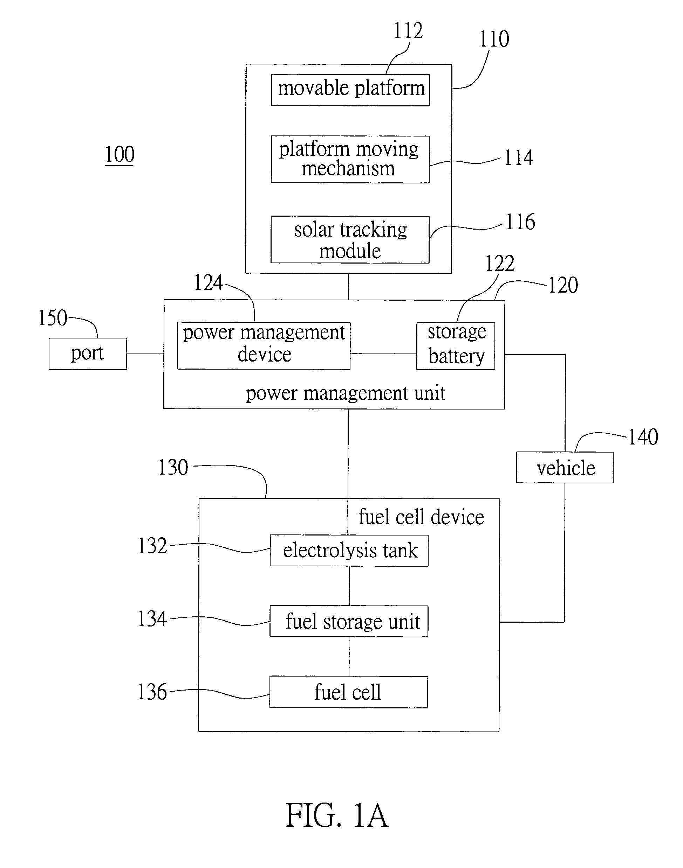

FIG. 1A is a schematic view of a power generation system 100 for use with a vehicle according to the present invention. As shown in FIG. 1A, the power generation system 100 comprises a photovoltaic power generation device 110, a power management device 120, and a fuel cell device 130. The power management device 120 comprises a storage battery 122 and a power management unit 124. The storage battery 122 is configured to store the converted electrical energy from the photovoltaic power generation device 110 and provide electric power output. The power management unit 124 is connected to the photovoltaic power generation device 110 and the storage battery 122 so as to prevent the storage battery 122 from being over-recharged, over-discharged, or reversely recharged. The fuel cell device 130 is connected to the power management device 120 and configured to receive the electrical energy from the photovoltaic power generation device 110. The fuel cell device 130 comprises an electrolysis tank 132, a fuel storage unit 134, and a fuel cell 136. The electrolysis tank 132 is connected to the power management device 120 and configured to electrolyze water to produce hydrogen and oxygen. The fuel storage unit 134 is configured to receive and store the hydrogen and the oxygen produced in the electrolysis tank 132. The fuel cell 136 is connected to the fuel storage unit 134 so as to receive hydrogen fuel therefrom and generate electric power to be supplied to the vehicle as a power source thereof.

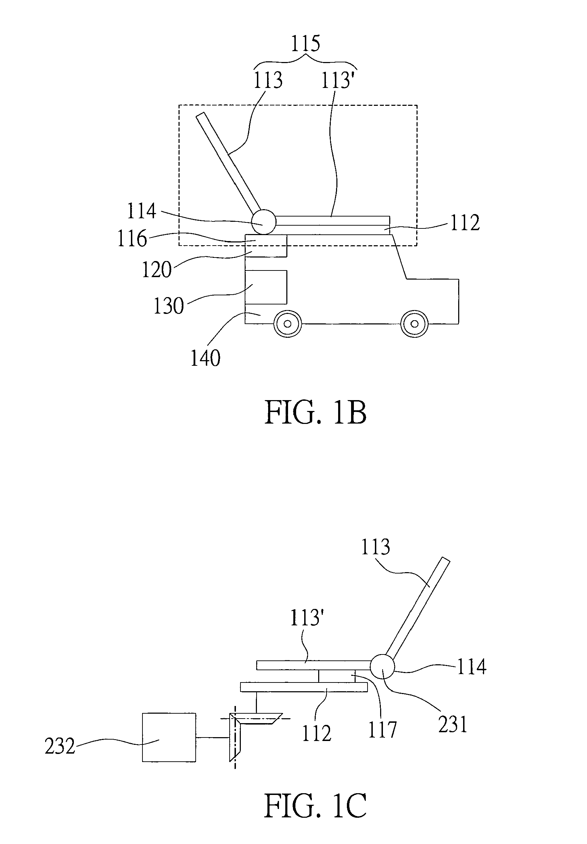

FIG. 1B is a schematic view of the photovoltaic power generation device 110 of the present invention. The photovoltaic power generation device 110 of the power generation system 100 for use with a vehicle 140 is connected to the vehicle 140. The photovoltaic power generation device 110 comprises a movable platform 112, a platform moving mechanism 114, and a solar tracking module 116. The movable platform 112 is configured to carry a photovoltaic power generation module 115 equipped with a solar panel 113 so as to convert light energy received by the solar panel 113 into electrical energy. The platform moving mechanism 114 is configured to move the movable platform 112. The solar tracking module 116 is connected to the platform moving mechanism 114 so as to determine an incident angle of light falling on the solar panel.

The solar panel of the present invention is selectively any appropriate panel, for example, a III-V group compound semiconductor solar panel, a polysilicon solar panel, an inorganic semiconductor solar panel, an organic semiconductor solar panel, or a dye-sensitized solar panel. The photovoltaic power generation module of the present invention can comprise a plurality of solar panels so as to receive more sunlight to be converted into more electrical energy. Referring to FIG. 1B, in a non-limiting specific embodiment of the present invention, the movable platform 112 carries at least a first solar panel 113 and a second solar panel 113', wherein the platform moving mechanism 114 enables the first solar panel 113 to tilt and form an elevation angle relative to the second solar panel 113'. The solar tracking module 116 is connected to the platform moving mechanism 114 so as to determine an incident angle of light falling on the solar panel and determine, by means of the platform moving mechanism 114, such as the elevation angle of the first solar panel 113, the direction of incident light falling on the solar panel or increase the incident light with a view to enhancing the efficiency of power generation.

The platform moving mechanism of the present invention comes in a single-axis form or a two-axis form and is fixed at any appropriate position of a vehicle (for example, a rack on top of the vehicle), so as to move the movable platform and the solar panel of the photovoltaic power generation module.

The solar tracking module of the present invention is optionally installed with a GPS receiver or a solar sensor (not shown) as needed, so as to compute the orientation of the sun automatically. Given related data of the GPS receiver or the solar sensor, for example, a predicted position of the solar tracking module whereby a sunbeam is perpendicular to the solar panel to the greatest extent, the solar panel is moved to the predicted position before being finely adjusted by maximum power point tracking (MPPT), so as to speed up attaining the maximum conversion power. The power management device or an external power source supplies the platform moving mechanism and the solar tracking module with power.

The power management device is electrically connected to the platform moving mechanism of the photovoltaic power generation device so as to move the movable platform. FIG. 1B illustrates a feasible way to implement a single-axis platform moving mechanism. Note that the illustration of FIG. 1B is not intended to limit the scope of the present invention. Referring to FIG. 1B, the photovoltaic power generation module 115 carried by a single-axis platform moving mechanism has a first solar panel 113 and a second solar panel 113'. In addition to a conventional sunlight capturing function, the first solar panel 113 serves a protective capping function, capping the photovoltaic power generation module 115 in order to keep the sun-facing side of the photovoltaic power generation module 115 clean whenever the first solar panel 113 is not in use for sunlight capturing. With the platform moving mechanism 114 carrying the photovoltaic power generation module 115 on a rack on top of the vehicle, the elevation angle of the first solar panel 113 of the photovoltaic power generation module 115 is altered as needed. Upon starting of the photovoltaic power generation module 115, the first solar panel 113 is lifted with a gear driven by the motor of the platform moving mechanism 114 until a theoretically desirable angle is attained. Furthermore, it is important to keep the elevation angle required for maximum output power according to variation in output power in practice.

In the course of movement of the platform moving mechanism, a single-axis or two-axis solar tracking module (not shown) compares the consumption power of the platform moving mechanism with the power output of the photovoltaic power generation module as scheduled. For instance, where the photovoltaic power generation module in operation persistently generates power greater than the lower limit of modular conversion power (for example, 1W) but insufficient to keep the platform moving mechanism operating, the solar tracking module instructs the platform moving mechanism to stop solar tracking movement. In another example, when it is cloudy, or as night falls, if the power output of the photovoltaic power generation module is persistently less than the lower limit of the modular conversion power within a specific period of time, the solar tracking module will instruct the platform moving mechanism to shut the first solar panel of the photovoltaic power generation module, or, in other words, to stop the operation of the photovoltaic power generation module.

Referring to FIG. 1C, which is a schematic view of a specific, illustrative embodiment of a two-axis platform moving mechanism of the present invention, an embodiment of a two-axis platform moving mechanism of the present invention has the following features. The first solar panel 113, the second solar panel 113', and the first motor 231 are installed on a carrier base 117 of the movable platform 112. The first motor 231 controls the elevation angle of the first solar panel 113.The second motor 232 drives the movable platform 112 and the second solar panel 113' to perform rotational movement horizontally by means of a gear train. In the aforesaid specific embodiments, implementation of the platform moving mechanism of the present invention is not limited to the described ways of moving or turning the solar panels in order to change the incident angle of sunlight. The specific embodiments are intended for description of several ways of integrating the platform moving mechanism into the solar panels of the photovoltaic power generation module, without limiting the scope of the present invention.

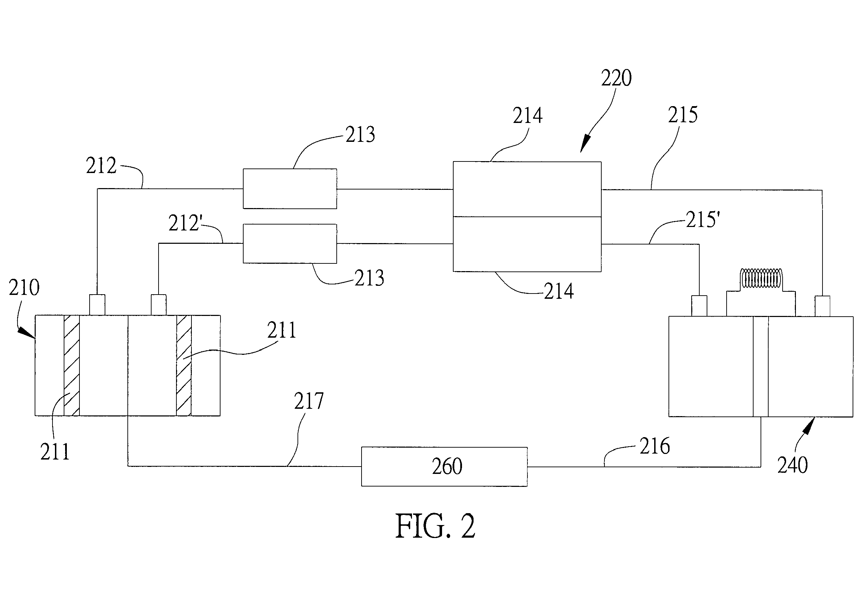

Referring to FIG. 2, a fuel cell device of the present invention comprises an electrolysis tank 210, a fuel storage unit 220, and a fuel cell 240. Electrodes 211 of the electrolysis tank 210 are electrically connected to the power management device (not shown) so as for hydrogen and oxygen to be produced by water electrolysis. The hydrogen and oxygen produced are delivered by a line 212 and a line 212', respectively, to steel bottle for storing hydrogen and oxygen or to the fuel storage unit 220 equipped with hydrogen-energy storing panels 214, for receipt and storage of the hydrogen and oxygen which originate from the electrolysis tank 210. Compressors 213 are installed between the electrolysis tank 210 and the fuel storage unit 220 as needed. The hydrogen and oxygen which originate from the electrolysis tank 210 are fed into the steel bottles or the hydrogen-energy storing panels 214 by the compressors 213, respectively, and then fed to the cathode and anode of the fuel cell 240 via a line 215 and a line 215', respectively. Upon delivery to the fuel cell 240, the hydrogen and oxygen react inside the fuel cell 240, and in consequence D.C. electric power and water are produced. The water which originates from the fuel cell 240 is delivered to a water tank 260 via a line 216. The water tank 260 is connected with the electrolysis tank 210 via a line 217, allowing water to be supplied to the electrolysis tank 210. Alternatively, the electrolysis tank 210 is provided with water from an external water source that adds the water to the electrolysis tank 210 or the water tank 260.

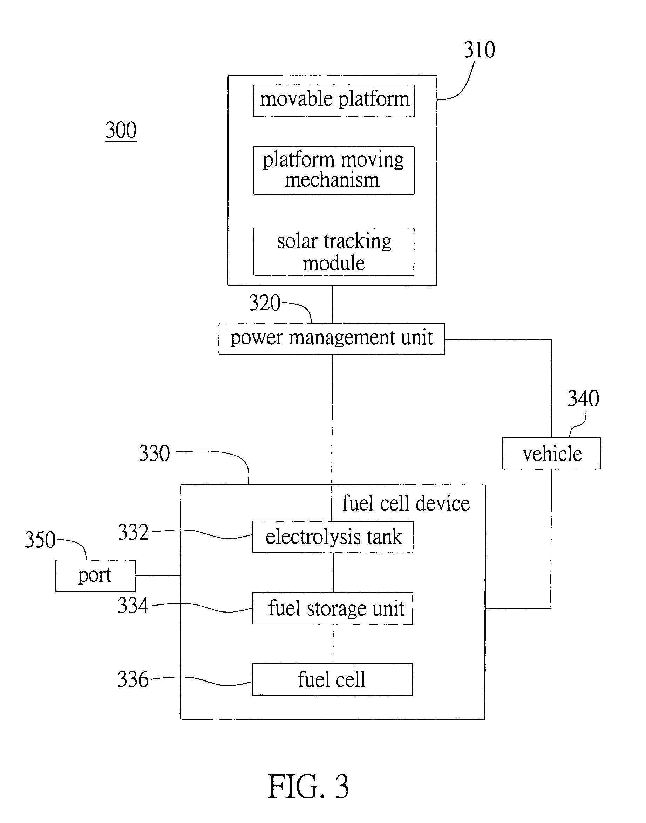

Referring to FIG. 3, in another preferred embodiment of the power generation system for use with a vehicle, the power generation system 300 comprises a photovoltaic power generation device 310, a power management unit 320, and a fuel cell device 330. The power management unit 320 is electrically connected to the photovoltaic power generation device 310 and configured to control a power source provided to the vehicle 340 by the photovoltaic power generation device 310. The fuel cell device 330 is connected to the power management unit 320 and configured to receive the electrical energy produced by the photovoltaic power generation device 310. The fuel cell device 330 comprises an electrolysis tank 332 connected with the power management unit 320 so as to produce hydrogen and oxygen by water electrolysis. The fuel storage unit 334 receives and stores the hydrogen and oxygen produced in the electrolysis tank 332. The fuel cell 336 is connected with the fuel storage unit 334 so as to receive hydrogen fuel from the fuel storage unit 334 and generate electric power to be supplied to the vehicle 340 as a power source thereof.

The most important difference in the power generation system between FIG. 3 and FIG. 1 is described as follows: the power generation system shown in FIG. 3 dispenses with a storage battery, and the converted electrical energy from the photovoltaic power generation device 310 is supplied to the platform moving mechanism, the solar tracking module, the fuel cell device, and any other external devices; hence, the power management unit not only controls a power source provided to the vehicle 340 by the photovoltaic power generation device 310 but also controls and determines whether water electrolysis is to take place in the electrolysis tank 332; for instance, the electrolysis tank is instructed to perform water electrolysis before the fuel storage unit reaches an upper limit of safe storage.

In another preferred embodiment of the present invention, a power management device or a power management unit is installed on and electrically connected to a vehicle so as to provide the vehicle with a power source. In yet another preferred embodiment of the present invention, the power generation system, which comprises a power management device or a power management unit, further comprises a port 150 (shown in FIG. 1) as needed. The port 150 is connected to the power management unit or the power management device so as to provide electrical connection with an external device. Alternatively, the power generation system further comprises a port 350 (shown in FIG. 3 but not limited thereto) connected to the fuel cell device 330, so as to provide electrical connection with an external device. Alternatively, both the power management unit and the fuel cell device are provided with ports for electrical connection with external devices.

Unlike a solar power generation system incapable of solar tracking, the power generation system of the present invention is characterized by integration of a fuel cell device and a photovoltaic power generation device capable of solar tracking and a 30% increase in the output power ratio thereof. Also, the power generation system of the present invention enables building integrated photovoltaics (BIPV) to be attached to windshields as needed, for further reduction of the costs of the electrodynamic system of a vehicle. The power generation system of the present invention is applicable to general vehicles and turns a vehicle into a mobile power generation system whose outdoor users need not worry about power supply to the vehicle but enjoy the convenience of gaining access to power supply anytime and anywhere.

## Claims

1. A power generation system for use with a vehicle, comprising:
a photovoltaic power generation device connected to the vehicle, comprising a movable platform, a platform moving mechanism, and a solar tracking module, wherein the movable platform is configured to carry a photovoltaic power generation module equipped with a solar panel so as to convert light energy received by the solar panel into electrical energy, the platform moving mechanism is configured to move the movable platform, and the solar tracking module is connected to the platform moving mechanism so as to determine an incident angle of light falling on the solar panel;
a power management device, comprising:
a storage battery for storing the converted electrical energy from the photovoltaic power generation module and providing electric power output; and
a power management unit connected to the photovoltaic power generation module and the storage battery so as to prevent the storage battery from being over-recharged, over-discharged, or reversely recharged; and
a fuel cell device connected to the power management device and configured to receive the electrical energy produced by the photovoltaic power generation module, the fuel cell device comprising:
an electrolysis tank connected to the power management device and configured to electrolyze water to produce hydrogen and oxygen;
a fuel storage unit for receiving and storing the hydrogen and the oxygen produced in the electrolysis tank; and
a fuel cell connected to the fuel storage unit so as to receive hydrogen fuel therefrom and generate electric power to be supplied to the vehicle as a power source thereof.

2. The power generation system of claim 1, wherein the power management unit is electrically connected to the platform moving mechanism of the photovoltaic power generation device so as to move the movable platform.

3. The power generation system of claim 1, wherein the power management device is connected to the vehicle so as to provide a power source thereof.

4. The power generation system of claim 1, further comprising a port connected to the power management device and configured for electrical connection with an external device.

5. The power generation system of claim 1, wherein the solar panel is one selected from the group consisting of a III-V group compound semiconductor solar panel, a polysilicon solar panel, an inorganic semiconductor solar panel, an organic semiconductor solar panel, and a dye-sensitized solar panel.

6. The power generation system of claim 1, further comprising a port connected to the fuel cell device and configured for electrical connection with an external device.

7. The power generation system of claim 1, further comprising a water tank for storing water required for electrolysis and receiving water produced by a reaction in a fuel cell.

8. A power generation system for use with a vehicle, comprising:
a photovoltaic power generation device connected to the vehicle, comprising a movable platform, a platform moving mechanism, and a solar tracking module, wherein the movable platform is configured to carry a photovoltaic power generation module equipped with a solar panel so as to convert light energy received by the solar panel into electrical energy, the platform moving mechanism is configured to move the movable platform, and the solar tracking module is connected to the platform moving mechanism so as to determine an incident angle of light falling on the solar panel;
a power management unit electrically connected to the photovoltaic power generation device and configured to control a power source provided to the vehicle by the photovoltaic power generation module; and
a fuel cell device for receiving, through the power management unit, the electrical energy produced by the photovoltaic power generation module, the fuel cell device comprising:
an electrolysis tank connected to the power management unit and configured to electrolyze water to produce hydrogen and oxygen;
a fuel storage unit for receiving and storing the hydrogen and the oxygen produced in the electrolysis tank; and
a fuel cell connected to the fuel storage unit so as to receive hydrogen fuel therefrom and generate electric power to be supplied to the vehicle as a power source thereof.

9. The power generation system of claim 8, wherein the power management unit is electrically connected to the platform moving mechanism of photovoltaic power generation device so as to move the movable platform.

10. The power generation system of claim 8, further comprising a port connected to the power management unit and configured for electrical connection with an external device.

11. The power generation system of claim 8, wherein the solar panel is one selected from the group consisting of a III-V group compound semiconductor solar panel, a polysilicon solar panel, an inorganic semiconductor solar panel, an organic semiconductor solar panel, and a dye-sensitized solar panel.

12. The power generation system of claim 8, further comprising a port connected to the fuel cell device and configured for electrical connection with an external device.

13. The power generation system of claim 8, further comprising a water tank for storing water required for electrolysis and receiving water produced by a reaction in a fuel cell.
